# EUROPEAN PATENT SPECIFICATION

(11) **EP 0 533 380 B1**
(45) Date of publication and mention of the grant of the patent: **26.06.1996**
(21) Application number: 92308038.6
(22) Date of filing: 04.09.1992
(51) Int. Cl.: G21F 9/02, B01J 4/00

(54) **Catalytic reactor**
Katalytischer Reaktor
Réacteur catalytique

(30) Priority: 18.09.1991 GB 9119885
(43) Date of publication of application: 24.03.1993
(73) Proprietor: NNC LIMITED, Knutsford Cheshire WA16 8QZ (GB)
(72) Inventor: Cheyne, Keith Alan, Heywood, Lancashire, OL10 2BZ (GB)
(74) Representative: Hoste, Colin Francis

(56) References cited:
- DE-U- 8 810 613
- FR-A- 2 573 996
- US-A- 3 986 839
- PATENT ABSTRACTS OF JAPAN vol. 008, no. 283 (C-258)25 December 1984 & JP-A-59 152 206 (TOSHIBA KK) 30 August 1984

## Description

This invention relates to a catalytic reactor particularly, but not exclusively, for purifying plasma exhaust from a nuclear reactor.

The plasma exhaust contains radioactive gases, such as tritium and deuterium, and compound gases containing active hydrogen. These gases must be purified by passing them through a catalytic reactor which is designed to crack methane into hydrogen and carbon or to split water vapour, with added carbon monoxide, into hydrogen and carbon dioxide in a water gas shift reaction.

In designing a catalytic reactor for such purposes, a number of requirements should be met. The volume of the reactor vessel containing the contaminated material (the "primary containment") should be the minimum consistent with efficient reaction. There should be an outer container (the "secondary containment") enclosing all of the hot surfaces produced in the reactor. (This secondary containment may not be required where the reactor is to be used for other, less hazardous, applications). The design should enable good temperature control of the reactor bed, and of the inlet gas passing into the reactor bed, to be achieved. The reactor should exhibit good thermal response while it is warming up under evacuated conditions before the inlet gas is admitted.

A known form of catalytic reactor for purifying nuclear reactor plasma exhaust gas comprises an inner cylindrical container for the catalyst bed and an intermediate chamber encircling the inner chamber with an annular space therebetween into the top of which the inlet gas is introduced. A heat-insulated outer secondary chamber encloses only part of the height of the intermediate chamber. Electrical heating elements are built into the wall of the intermediate chamber for heating the inlet gas and the catalyst bed.

In operation of the catalytic reactor, contaminated gas is fed into the top of the annular space between the inner container and the intermerdiate chamber, is heated by the heating elements as it passes downwards through the space, thereby transferring some heat to the catalyst bed through the wall of the inner container, and passes upwards through the catalyst bed, transferring further heat to the bed. The cooled and reacted gas is exhausted from the top of the inner container.

This known catalytic reactor suffers from a number of disadvantages. For example, the catalyst is not heated directly. It is heated only by radiation through the walls of the intermediate chamber and the inner container and by the heat transferred from the gas. During warmup, while there is no gas present in the reactor, the heating of the catalyst will rely entirely on radiation through the walls and the evacuated annular space, and will therefore be very slow. As the outer chamber does not enclose the whole of the inner container and the intermediate chamber, the possibility of leakage of contaminated gases into the atmosphere is increased. This is further aggravated by the fact that penetrations into the inner container and the intermediate chamber are exposed.

It is an object of the present invention to provide a catalytic reactor in which at least some of the above disadvantages are alleviated.

According to the invention there is provided a catalytic reactor comprising a primary vessel containing a catalyst bed; heating means for directly heating the primary vessel to heat the catalyst bed; and a gas inlet/outlet system for the primary vessel, characterised in that the gas inlet/outlet system comprises an inner pipe for reacted gas leaving the primary vessel and an outer pipe containing said inner pipe and defining an annular path between the pipes for conveying the contaminated gas into the primary vessel.

For use of the reactor in relation to some types of contaminated gases, the primary vessel will be entirely contained within a secondary containment vessel.

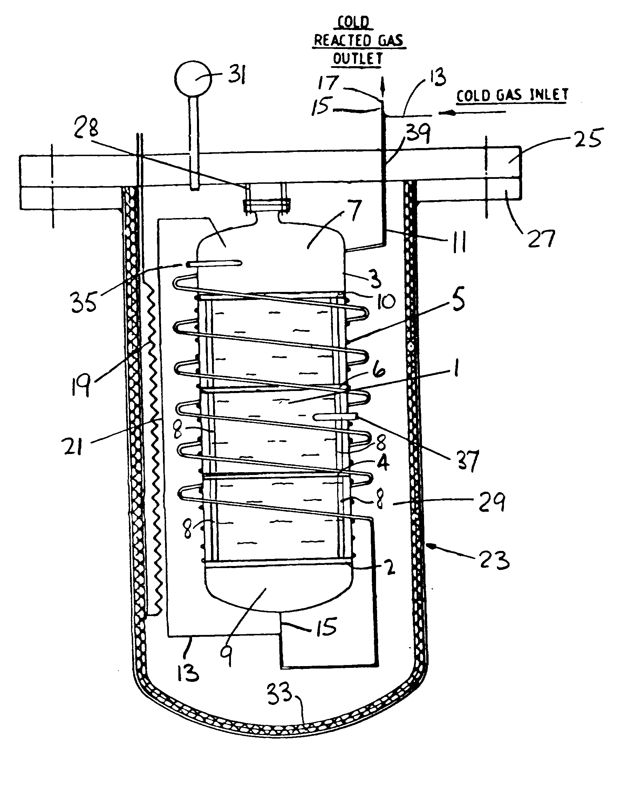

An embodiment of the invention will now be described, by way of example, with reference to the accompanying drawing, which is a schematic cross-sectional view of a catalytic reactor in accordance with the invention.

Referring to the drawing, a catalyst bed 1 is contained within a vertical closed and sealed cylindrical primary vessel 3. The bed is carried by perforated trays 2,4,6, the tray 2 being attached to the vessel by, for example, welding, and the trays 4 and 6 being supported above the tray 2 by legs 8. A perforated cover 10 prevents spillage of the catalyst. The base of each tray may be a gauze sheet, the mesh of which is sufficiently fine to prevent catalyst particles from falling through it. The catalyst may be a nickel metal catalyst which may be plated on to ceramic substrates to maximise the surface area. An electrical heater 5 is provided around and in contact with the vessel 3, so that the catalyst is directly and rapidly heated. The primary vesser 3 is dimensioned to contain the required amount of catalyst with only minimal gas spaces 7 and 9 at the top and bottom of the vessel.

A heat exchanger 11 comprises two coaxial pipes 13,15 which are wound into a helix which, for the sake of compactness, is disposed around, and but spaced from the primary vessel 3. The annular space between the outer pipe 13 and the inner pipe 15 conducts the cold contaminated gas into the primary vessel. The coaxial pipe arrangement continues down to the bottom of the primary vessel, where the pipes 13 and 15 separate. The pipe 13 then extends upwards, passes through the wall of the primary vessel near its top, and discharges gas into the space 7. The inner pipe 15 receives hot reacted gas from the bottom of the primary vessel, passes it upwards through the helix and discharges it from a gas outlet 17. The hot reacted gas leaving the primary vessel therefore flans in heat exchange relationship with the cold inlet gas and in the opposite direction through the helix. As the hot gas passes up the helix it gives up heat to the cold inlet gas, so that the reacted gas leaving the outlet 17 is relatively cool and the contaminated gas entering the top of the primary vessel is preheated. The inlet gas is further heated, before entry into the primary vessel, by an electrical heater 19 which heats the vertical section 21 of the pipe 13.

The primary vessel 3 and the heat exchanger 11 are contained within a secondary containment vessel 23. The vessel 23 is sealed by a cover plate 25 which is attached to a flange 27 of the vessel. The primary vessel 3 is suspended from the cover plate 25 by tie bars 28. The tie bars are made of heat-insulating material in order to minimise heat loss due to conduction to the cover plate 25.

The interspace 29 between the vessels 3 and 23 is evacuated by a pump 31. The evacuated space acts as a good thermal barrier for reducing heat loss from the catalyst bed 1. Further thermal insulation 33, such as a reflective foil, is provided on the inner surface of the wall of the vessel 23. The pump 31 will also remove any material which may seep into the space 29.

Due to the fact that the inlet gas in the heat exchanger 11 flows in the annular space around the inner pipe 15 carrying the hot reacted gas, if any hot gas should happen to permeate through the wall of the pipe 15, it will mix with the inlet gas and be carried back into the primary vessel 3. Hot gas will not, therefore, escape into the space 29 within the secondary containment vessel 23.

A pocket 35 is provided near the top of the primary vessel 3 to receive a thermocouple for measuring the temperature of the gas entering the vessel from the pipe 13. A further pocket 37 projects into the catalyst bed 1 to receive a thermocouple for measuring the temperature of the bed. The heaters 5 and 19 are controlled in dependence upon the thermocouple outputs, to achieve the required gas and catalyst temperature. The thermocouple pockets 35 and 37 have their open ends communicating with the interspace 29, so that any gas which may permeate through the walls of the pockets will be removed by the pump 31.

It will be seen that all of the penetrations into the catalyst bed lie within the secondary containment vessel 23, and that all penetrations which extend out through the cover plate of the vessel 23 are cold. For example, the inlet gas and the outlet gas are both cold at a penetration 39 where the heat exchanger 11 passes through the cover plate 25.

The reactor can be readily built without the need for tight tolerances and without the use of any enclosed seals. The connections of the pipes 13 and 15 to the primary vessel 3 can be permanent, e.g. welded, connections.

A reactor according to the invention provides the following advantages:-
1. Since the vessel 3 containing the bed 1 is directly heated by the heater 5, warmup of the bed is rapid, and is helped, rather than hindered, by the evacuated space 29.
2. The incoming gas is preheated by the outgoing reacted gas, which is thereby cooled before leaving the secondary containment vessel.
3. The temperature of the incoming gas and the temperature of the catalyst bed can be accurately controlled.
4. The primary vessel 3 is totally enclosed by the secondary vessel 23, so that the risk of gas release into the environment is reduced.
5. The design can enable a reduction of the volume of the reactor to be achieved, so that the enclosed surface area is reduced and fast evacuation can be effected.

Although the reactor is described above in relation to the treatment of radioactive gases such as tritium and deuterium, it could alternatively be used for any other toxic or dangerous gas. In cases where the gases are not too hazardous, the secondary containment vessel 23 could be omitted.

## Claims

1. A catalytic reactor comprising a primary vessel (3) containing a catalyst bed (1); heating means (5) for directly heating the primary vessel to heat the catalyst bed; and a gas inlet/outlet system for the primary vessel, characterised in that the gas inlet/outlet system comprises an inner pipe (15) for reacted gas leaving the primary vessel and an outer pipe (13) containing said inner pipe and defining an annular path between the pipes (13,15) for conveying contaminated gas into the primary vessel (3).

2. A reactor as claimed in Claim 1, characterised in that part of the gas inlet/outlet system (13, 15) is formed into a helix which encircles the primary vessel (3).

3. A reactor as claimed in Claim 1 or Claim 2, characterised in that the gas inlet/outlet system (13, 15) includes a section (21) of pipe which carries the contaminated gas into the primary vessel (3); and means (19) to heat said pipe section, whereby the contaminated gas is preheated before entering the primary vessel.

4. A reactor as claimed in any preceding claim, characterised by means to sense the temperature of the contaminated gas entering the primary vessel (3).

5. A reactor as claimed in any preceding claim, characterised by means to sense the temperature of the catalyst bed (1).

6. A reactor as claimed in any preceding claim, characterised by a secondary vessel (23) enclosing the primary vessel (3) and the gas inlet/outlet (13, 15) system with a space (29) therebetween.

7. A reactor as claimed in Claim 6, characterised by pumping means (31) for evacuating the space (29) between the primary and secondary vessels (3, 23).

8. A reactor as claimed in Claim 6 or Claim 7, characterised by means (28) suspending the primary vessel (3) from the roof of the secondary vessel (23).

9. A reactor as claimed in any preceding claim, characterised in that the means (5) to heat the primary vessel (3) comprises an electrical heater encircling the primary vessel.

10. A reactor as claimed in Claim 2, characterised in that the means (19) to heat the pipe section (21) comprises an electrical heater.

11. A reactor as claimed in any preceding claim, characterised in that the gas inlet/outlet system (13,15) is at least partly formed into a helix which is disposed around the primary vessel (3).

12. A reactor as claimed in any preceding claim, characterised in that the catalyst comprises nickel.

13. A reactor as claimed in Claim 12, characterised in that the nickel is plated on to ceramic substrate means.

## Patentansprüche

1. Katalytischer Reaktor aufweisend einen Primärkessel (3), der ein Katalysatorbett (1), Heizvorrichtungen (5) zum direkten Aufheizen des Primärkessels, so daß das Katalysatorbett aufgeheizt wird, und ein Gaseinlaß-/-auslaßsystem für den Primärkessel enthält,
**dadurch gekennzeichnet,**
daß das Gaseinlaß-/-auslaßsystem eine innere Leitung (15) für das abreagierte Gas, das den Primärkessel verläßt, und eine äußere Leitung (13) aufweist, die die innere Leitung enthält, und einen ringförmigen Durchlaß zwischen den Leitungen (13,15) bestimmt, um verunreinigtes Gas in den Primärkessel (3) zu überführen.

2. Reaktor nach Anspruch 1,
**dadurch gekennzeichnet,**
daß ein Teil des Gaseinlaß-/-auslaßsystems (13,15) die Form einer Helix aufweist, die den Primärkessel (3) umgibt.

3. Reaktor nach Anspruch 1 oder Anspruch 2,
**dadurch gekennzeichnet,**
daß das Gaseinlaß-/auslaßsystem (13,15) einen Abschnitt (21) der Leitung aufweist, die das verunreinigte Gas in den Primärkessel (3) führt, und Vorrichtungen (19), um diesen Leitungsabschnitt aufzuheizen, wodurch das verunreinigte, Gas vorgeheizt wird, bevor es in den Primärkessel einströmt.

4. Reaktor nach einem der vorhergehenden Ansprüche,
**gekennzeichnet durch**
Vorrichtungen, um die Temperatur des verunreinigten Gases, das in den Primärkessel (3) einströmt, zu bestimmen.

5. Reaktor nach einem der vorhergehenden Ansprüche,
**gekennzeichnet durch**
Vorrichtungen zur Bestimmung der Temperatur des Katalysatorbettes (1).

6. Reaktor nach einem der vorhergehenden Ansprüche,
**dadurch gekennzeichnet,**
daß ein Sekundärkessel (23) den Primärkessel (3) und das Gaseinlaß-/auslaßsystem (29) umschließt, wobei sich dazwischen ein Raum (29) befindet.

7. Reaktor nach Anspruch 6,
**gekennzeichnet durch**
eine Pumpvorrichtung (31) zur Evakuierung des Raums (29) zwischen dem Primär- und Sekundärkessel (3,23).

8. Reaktor nach Anspruch 6 oder Anspruch 7,
**gekennzeichnet durch,**
eine Vorrichtung (28), durch die der Primärkessel (3) an der Abdeckung des Sekundärkessels (23) aufgehängt ist.

9. Reaktor nach einem der vorhergehenden Ansprüche,
**dadurch gekennzeichnet,**
daß die Vorrichtung zum Aufheizen des Primärkessels (3) ein elektrisches Heizgerät aufweist, welches den Primärkessel umgibt.

10. Reaktor nach Anspruch 2,
**dadurch gekennzeichnet,**
daß die Vorrichtung (19) zum Aufheizen des Leitungsabschnitts (21) ein elektrisches Heizgerät aufweist.

11. Reaktor nach einem der vorhergehenden Ansprüche,
**dadurch gekennzeichnet,**
daß das Gaseinlaß-/-auslaßsystem (13,15) zumindet teilweise die Form einer Helix aufweist, die um den Primärkessel (3) herum angeordnet ist.

12. Reaktor nach einem der vorhergehenden Ansprüche,
**dadurch gekennzeichnet,**
daß der Katlysator Nickel enthält.

13. Reaktor nach Anspruch 12,
**dadurch gekennzeichnet,**
daß das Nickel auf ein keramisches Substrat plattiert ist.

## Revendications

1. Réacteur catalytique comprenant un récipient primaire (3) contenant un lit de catalyseur (1) ; un moyen ou dispositif de chauffage (5) pour chauffer directement le récipient primaire afin de chauffer le lit de catalyseur ; et un système d'entrée/sortie de gaz pour le récipient primaire, réacteur caractérisé en ce quele système d'entrée/sortie de gaz comprend un tuyau intérieur (15) pour le gaz ayant réagi et qui quitte le récipient primaire et un tuyau extérieur (13) contenant ledit tuyau intérieur et délimitant un trajet annulaire entre les tuyaux (13, 15) pour convoyer du gaz contaminé à introduire dans le récipient primaire (3).

2. Réacteur selon la revendication 1, caractérisé en ce qu'une partie du système d'entrée/sortie de gaz (13, 15) est mise sous forme d'une hélice qui encercle le récipient primaire (3).

3. Réacteur selon la revendication 1 ou la revendication 2, caractérisé en ce que le système d'entrée/sortie de gaz (13, 15) comprend un tronçon (21) de tube qui fait pénétrer le gaz contaminé dans le récipient primaire (3) ; et un moyen (19) pour chauffer ledit tronçon de tube, de sorte que le gaz contaminé est préchauffé avant d'entrer dans le récipient primaire.

4. Réacteur tel que revendiqué dans l'une quelconque des revendications précédentes, caractérisé en ce qu'il comporte un moyen pour déceler la température du gaz contaminé pénétrant dans le récipient primaire (3).

5. Réacteur selon l'une quelconque des revendications précédentes, caractérisé par l'existence d'un moyen pour déceler la température du lit de catalyseur (1).

6. Réacteur selon l'une quelconque des revendications précédentes, caractérisé en ce qu'il comporte un récipient secondaire (23) entourant, avec un espace (29) entre eux, le récipient primaire (3) et le système d'entrée/sortie de gaz (13, 15).

7. Réacteur selon la revendication 6, caractérisé en ce qu'il comporte un moyen ou dispositif de pompage (31) pour faire le vide dans l'espace (29) situé entre les récipients primaire et secondaire (3, 23).

8. Réacteur selon la revendication 6 ou la revendication 7, caractérisé en ce qu'il comporte un moyen (28) pour suspendre le récipient primaire (3) au toit ou au sommet du récipient secondaire (23).

9. Réacteur selon l'une quelconque des revendications précédentes, caractérisé en ce que le moyen ou dispositif (5) pour chauffer le récipient primaire (3) comprend un organe de chauffage électrique encerclant le récipient primaire.

10. Réacteur selon la revendication 2, caractérisé en ce que le moyen (19) pour chauffer le tronçon de tube (21) comprend un dispositif électrique de chauffage.

11. Réacteur selon l'une quelconque des revendications précédentes, caractérisé en ce que le système d'entrée/sortie de gaz (13, 15) est au moins partiellement mis sous forme d'une hélice qui est disposée autour du récipient primaire (3).

12. Réacteur selon l'une quelconque des revendications précédentes, caractérisé en ce que le catalyseur est constitué par, ou comprend, du nickel.

13. Réacteur selon la revendication 12, caractérisé en ce que le nickel est plaqué sur un substrat en matière céramique.
